# EUROPÄISCHE PATENTANMELDUNG

(11) **EP 0 739 774 A1**
(43) Veröffentlichungstag der Anmeldung: **30.10.1996**
(21) Anmeldenummer: 96106591.9
(22) Anmeldetag: 26.04.1996
(51) Int. Cl.: B60N 3/10

(54) **Vorrichtung in der Form einer Kassette zur Aufnahme/Halterung von Behältnissen**

(30) Priorität: 27.04.1995 CH 1212/95
(71) Anmelder: Sarnatech technamac Albert Eichhoff GmbH, 51709 Marienheide (DE)
(72) Erfinder: Rudek, Paul Franz, 58097 Hagen (DE); Schäfer, Stefan, 51709 Marienheide (DE); Thiemann, Ulrich, 50389 Wesseling (DE); Poloczek, Bernard Theo, 50937 Köln (DE)
(74) Vertreter: Zink-Wild, Markus Peter

(57) **Zusammenfassung**

Die erfindungsgemässe Vorrichtung, auch Cupholder genannt, umfasst zwei Halterungselemente (9) zur Aufnahme von Behältnissen.

Diese Halterungselemente (9) befinden sich auf einer Trägerplatte (5).

Diese Halterungselemente (9) sind klappbar und können gemeinsam mit der Trägerplatte (5) in einer Kassette verstaut werden.

## Beschreibung

Die vorliegende Erfindung betrifft eine Vorrichtung in der Form einer Kassette zur Aufnahme/Halterung von Behältnissen. Sie betrifft auch eine Vorrichtung, mit welcher ein Körper axial bewegbar zu einem Drehkranz in Form eines Drehhubes angeordnet ist.

Die bekannten Trinkbecherhalter, sogenannte Cupholder, haben den grossen Nachteil, dass sie viel Platz beanspruchen und deswegen in Fahrzeugen, wie beispielsweise Autos, Boote, Flugzeuge, Wohnwagen, äusserlich an einer Armatur angebracht werden.

Dies hat den weiteren Nachteil, dass diese Cupholder nicht verstaut werden können und somit immer sichtbar bleiben und somit nicht im Einklang zum Gesamterscheinungsbild des Fahrzeuginnenraumes stehen.

Andere Cupholder, welche in eine Konsole oder Schalttafel integriert werden können, benötigen ebenfalls viel Platz und können wegen Platzmangel nicht in ergonomischer Reichweite der Fahrzeuginsassen, insbesondere des Fahrzeugführers, installiert werden, weil wichtige Funktionen im Zusammenhang mit der Sicherheit bevorzugt in ergonomischer Reichweite angebracht werden.

Es ist ein Ziel der vorliegenden Erfindung, einen Cupholder zur Verfügung zu stellen, welcher wenig Platz beansprucht und in ergonomischer Reichweite des Fahrzeugführers und des Beifahrers in der Armatur verstaut werden kann und sich harmonisch ins Gesamterscheinungsbild des Fahrzeuginnenraumes integriert.

Dieser Cupholder soll mittels herkömmlicher Technik in kostengünstiger und einfacher Herstellungsweise produziert werden können.

Dieser Cupholder soll ausserdem stabil sein und betriebssicher funktionieren.

Ausserdem soll er bei der Herstellung des Fahrzeuges oder auf Wunsch des Fahrzeughalters nachträglich in einen dafür vorgesehenen Bauraum in einer Fahrzeugarmatur eingebaut werden können.

Dieser Cupholder soll durch den Fahrzeugführer derart in Betrieb genommen und nach Gebrauch wieder ausser Betrieb gesetzt werden können, dass er in seiner Aufmerksamkeit auf den jeweiligen Verkehr weder gestört noch abgelenkt wird.

Dieser Cupholder soll nicht nur in Fahrzeuge sondern auch beispielsweise in Küchen und in Möbeln, wie Nachttische, insbesondere in Spitälern, Altersheimen, Kindergärten, Wohnmobilen, etc., eingebaut werden können.

Dieser Cupholder soll überall eingebaut werden können und soll ohne Fremdenergie, wie elektrischer Strom, funktionieren.

Eine teilweise manuelle Betätigung wird dabei nicht als Fremdenergie angesehen.

Alle obigen Ziele werden mit der ersten erfindungsgemässen Vorrichtung erreicht.

Die erste erfindungsgemässe Vorrichtung in der Form einer Kassette zur Aufnahme/Halterung von Behältnissen, insbesondere Flaschen, Dosen, Becher, Gläser, ist dadurch gekennzeichnet, dass
- sich im Kassettenboden 1 ein erster Lagerpunkt 2 befindet, um welchen ein Träger-Grundplattenelement 3 schwenkbar gelagert und befestigt ist,
- dieses Träger-Grundplattenelement 3 mittels einem entriegelbaren Sicherungsmechanismus in der Kassette gehalten wird,
- dieses Träger-Grundplattenelement 3 mittels einer ersten Federkraft 4 bei entsprechender Entriegelung ausschwenkbar angeordnet ist,
- die Trägerplatte 5 auf der Grundplatte 6 bei entsprechendem Ausschwenkwinkel des Träger-Grundplattenelementes 3 entweder manuell oder mittels einer zweiten Federkraft 7 kontrolliert bis zu einer ersten Arretierung ausfahrbar und rückführbar mittels Führungsleisten 8 angeordnet ist,
- sich auf der Trägerplatte 5 ein erstes von insgesamt zwei Halterungselementen 9 befindet, welches axial bewegbar zu einem Drehkranz 10 in Form eines Drehhubes angeordnet ist,
- das genannte Halterungselement 9 von wenigstens drei ein- und ausschwenkbaren Stützen 11 gehalten und getragen wird,
- das erste Ende 12 jeder dieser Stützen 11 mit dem genannten Halterungselement 9 mittels einem Gelenk 13, welches wenigstens zwei voneinander unabhängige Bewegungen zulässt, verbunden ist,
- das zweite Ende 14 jeder dieser Stützen 11 in der genannten Trägerplatte 5 gelagert ist,
- sich im Bereich des genannten zweiten Endes 14 jeder dieser Stützen 11 eine über ihre Lagerpunkte 15 hinausgehende Verlängerung 16 befindet,
- diese Verlängerungen 16 mit dem Drehkranz 10 derart in Verbindung stehen, dass sie eine radiale Bewegung des genannten Drehkranzes 10 aufnehmen und umsetzen können,
- der genannte Drehkranz 10 mit der genannten Trägerplatte 5 über eine Achse 17 verbunden ist,
- der Drehkranz 10 mittels einer zentralen Sicherungsscheibe 18 und/oder mittels Brücken 19 auf der Unterseite der genannten Trägerplatte 5 gehalten wird,
- der Drehhub mittels eines integrierten Anschlages derart begrenzt ist, dass in ausgefahrener Endstellung eine Standfestigkeit gewährleistet ist,
- der Antrieb 20 des genannten Drehkranzes 10 exzentrisch erfolgt,
- dieser Antrieb 20 durch ein Führungselement 21 gesteuert wird,
- dieses Führungselement 21 mit dem genannten Drehkranz 10 mechanisch beweglich verbunden ist,
- die genannten Führungsleisten 8 derart geformt sind, dass einerseits die Trägerplatte 5 in diesen Führungsleisten 8 sicher geführt und gehalten wird und andererseits das genannte Führungselement 21 in diesen Führungsleisten 8 seine Funktion als Steuerungselement übernehmen kann,
- der Drehhubmechanismus ausgelöst wird, sobald das genannte Führungselement 21 die entsprechende Führungsleiste 8 der Grundplatte 6 verlässt, respektive
- der Drehhubmechanismus rückgängig gemacht wird, sobald das genannte Führungselement 21 die entsprechende Führungsleiste 8 der Grundplatte 6 wieder erreicht, und
- die Trägerplatte 5 durch manuelle Ueberwindung der genannten ersten Arretierung entweder eine Rückführung in die Ausgangsposition unter automatischer Rückführung des Drehhubmechanismuses des ersten Halterungselementes 9 zulässt oder einen weiteren Ausfahrweg in die Endposition ermöglicht, wobei sich in letzterem Falle das auf der Trägerplatte 5 angeordnete zweite Halterungselement 9 entfaltet, welches analog dem genannten ersten Halterungselement 9 aufgebaut ist und die gleiche Funktion erfüllt, wobei auch in diesem Falle die Rückführung in die Ausgangsposition unter automatischer Rückführung der Drehhubmechanismen beider Halterungselemente 9 manuell erfolgt.

Bevorzugte Ausführungsformen dieser ersten erfindungsgemässen Vorrichtung sind in den abhängigen Ansprüchen definiert.

Bei dieser ersten erfindungsgemässen Vorrichtung kommt als Kernstück die zweite erfindungsgemässe Vorrichtung zum Einsatz.

Diese zweite erfindungsgemässe Vorrichtung ist aber nicht auf den Einsatz im erfindungsgemässen Cupholder, also der ersten erfindungsgemässen Vorrichtung, beschränkt, sondern kann universell auch für andere Anwendungen, bei denen ein Drehhubmechanismus vorgesehen ist, eingesetzt werden, beispielsweise in der Robotertechnik oder Fördertechnik.

Die zweite erfindungsgemässe Vorrichtung, mit welcher ein Körper 25 axial bewegbar zu einem Drehkranz 26 in Form eines Drehhubes angeordnet ist, ist dadurch gekennzeichnet, dass
- der genannte Körper 25 von wenigstens drei ein- und ausschwenkbaren Stützen 27 gehalten und getragen wird,
- das erste Ende 28 jeder dieser Stützen 27 mit dem genannten Körper 25 mittels einem Gelenk 29, welches wenigstens zwei voneinander unabhängige Bewegungen zulässt, verbunden ist,
- das zweite Ende 30 jeder dieser Stützen 27 in einer Trägerplatte 31 gelagert ist,
- sich im Bereich des genannten zweiten Endes 30 jeder dieser Stützen 27 eine über ihre Lagerpunkte 32 hinausgehende Verlängerung 33 befindet,
- diese Verlängerungen 33 mit dem Drehkranz 26 derart in Verbindung stehen, dass sie eine radiale Bewegung des genannten Drehkranzes 26 aufnehmen und umsetzen können,
- der genannte Drehkranz 26 mit der genannten Trägerplatte 31 über eine Achse 34 verbunden ist,
- der genannte Drehkranz 26 mittels einer zentralen Sicherungsscheibe 35 und/oder mittels Brücken 36 auf einer Seite der genannten Trägerplatte 31 gehalten wird,
- der Drehhub mittels eines integrierten Anschlages derart begrenzt ist, dass in ausgefahrener Endstellung eine Standfestigkeit gewährleiset ist,
- der Antrieb 37 des genannten Drehkranzes 26 zentrisch oder exzentrisch erfolgt,
- der Antrieb 37 durch ein Führungselement 38 gesteuert wird, und
- dieses Führungselement 38 mit dem genannten Drehkranz 26 verbunden ist.

Bevorzugte Ausführungsformen dieser zweiten erfindungsgemässen Vorrichtung sind in den abhängigen Ansprüchen definiert.

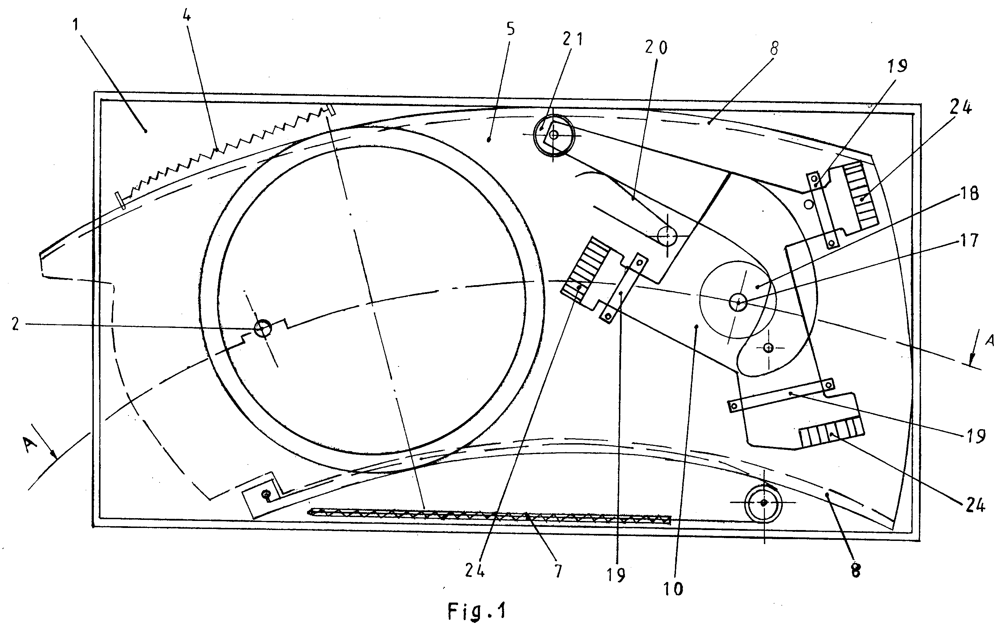

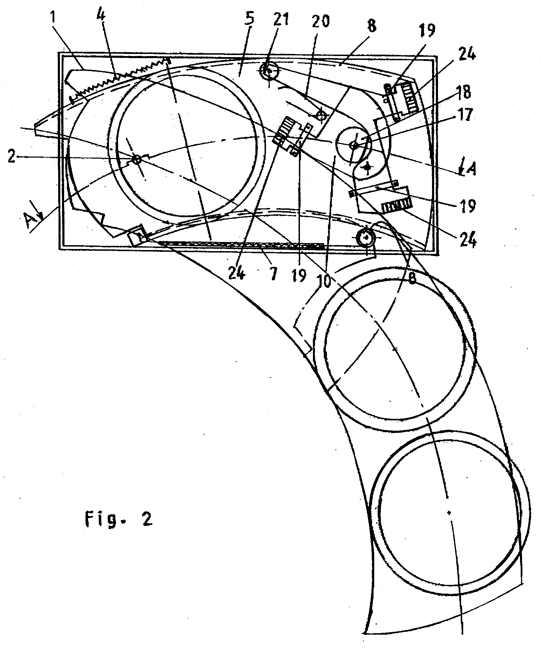

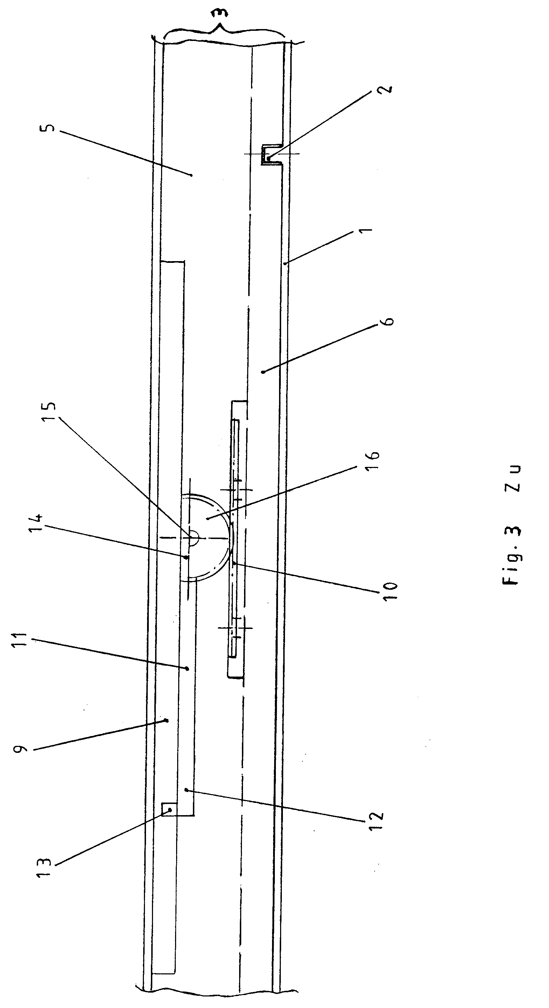

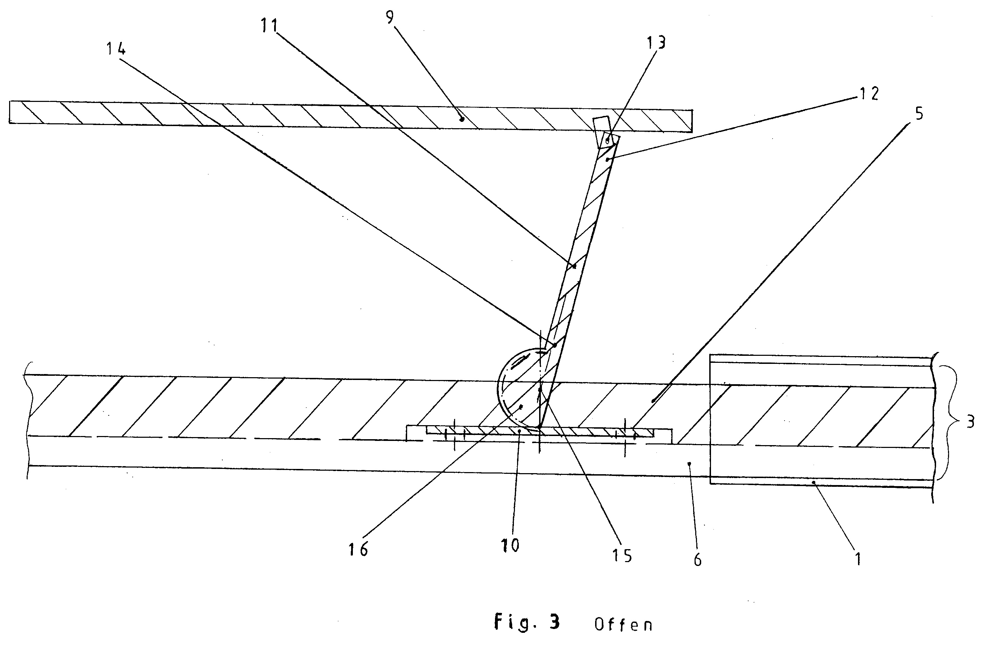

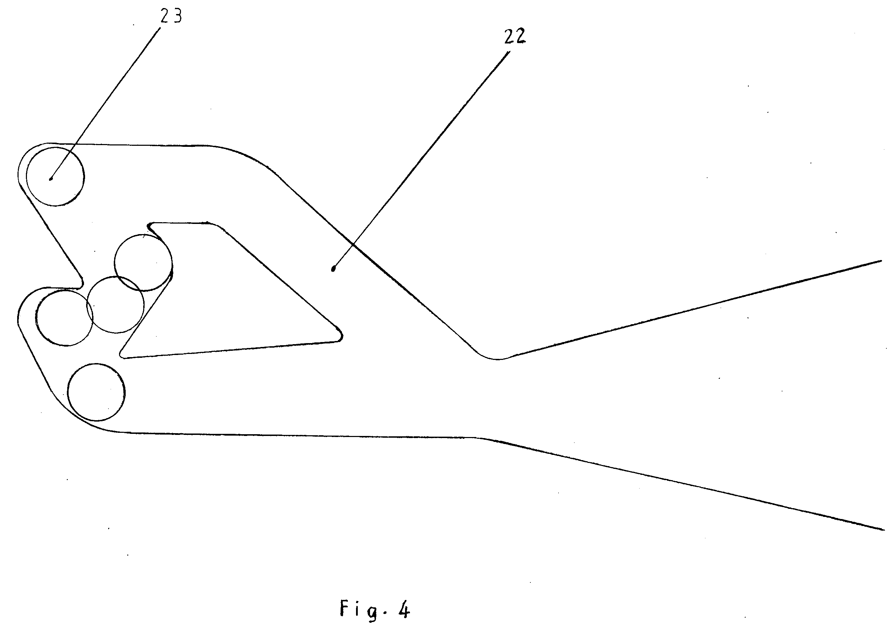

Im folgenden Teil werden unter Bezugnahme auf die Figuren 1 bis 4 mögliche Ausführungsformen der ersten erfindungsgemässen Vorrichtung beschrieben.

Figur 1 zeigt in der Draufsicht rein schematisch eine erfindungsgemässe Vorrichtung in der Ausgangsposition. Das Träger-Grundplattenelement 3 ist teilweise durchscheinend dargestellt.

Figur 2 zeigt in der Draufsicht rein schematisch eine erfindungsgemässe Vorrichtung in ausgefahrener Position.

Figur 3 zeigt einen Längsschnitt entlang der Achse A-A in offener und geschlossener Form.

Dabei ist das Träger-Grundplattenelement 3 bis zur ersten Arretierung ausgefahren. Damit ist das erste Halterungselement 9 vollständig aufgerichtet und damit in Endposition.

Figur 4 zeigt ein Beispiel eines Sicherungsmechanismuses.

Figur 5 zeigt einen Längsschnitt durch die zweite erfindungsgemässe Vorrichtung, wobei der Körper 25 in teilweise aufgerichteter Form dargestellt ist.

Figur 6 zeigt in der Draufsicht rein schematisch einen möglichen Antrieb für die zweite erfindungsgemässe Vorrichtung.

Dabei werden Ausführungsformen, wie sie in den abhängigen Ansprüchen definiert sind, normalerweise nicht wiederholt.

Die äusseren Abmessungen der Kassette sind wie folgt: Höhe 17 mm, Breite 220 mm, Tiefe von 115 mm bis 125 mm, je nach erforderlicher Frontblende.

Die Kassette ist aus Stabilitätsgründen vorzugsweise aus einem Metall, wie ein gewalztes Stahlblech, oder einer Legierung, beispielsweise Messing, hergestellt.

Die Kassette kann aber auch teilweise aus verstärktem Kunststoff, wie Polyamid, PA6, mit etwa 30 % Glasfasern, hergestellt sein.

Die Trägerplatte 5 und die Grundplatte 6 können aus geeigneten thermoplastischen Kunststoffen hergestellt sein.

Die geometrische Form des Träger-Grundplattenelementes 3 ist abhängig von dem zur Verfügung stehenden Bau- und Arbeits-, respektive Funktionsraum, und kann linear oder radial ausgeführt werden.

Die erste Federkraft 4 und die zweite Federkraft 7 können je eine Druck-, Zug- oder Schenkelfeder sein.

Die erste Arretierung kann beispielsweise mittels eines Kugelkäfigs erfolgen.

Die Führungsleisten 8 können so gestaltet sein, wie sie technisch am einfachsten zweckmässig gestaltet werden können und alle an sie gestellten Anforderungen erfüllen.

Das Halterungselement 9 hat vorzugsweise die Form eines Ringes, welcher aus zwei Teilen aus thermoplastischem Material aufgebaut ist.

Dieser Ring besteht vorzugsweise aus einem harten Kern, welcher mit einem elastischen, weicheren Material ummantelt ist.

Dieses elastische weiche Material ist in Richtung Zentrum des Ringes lippenförmig ausgebildet, um verschiedene Durchmesser der einzuführenden Behältnisse überbrücken zu können.

Der Drehkranz 10 ist aus Gründen der geringen Bauhöhe zweckmässig aus einem oben genannten Metall gefertigt.

Die Form des Drehkranzes 10 ist je nach Funktion variabel gestaltet.

Die Stützen 11 können in eingeschwenkter Position je nach vorhandenen Platzverhältnissen in die Trägerplatte 5 eingelassen sein.

Die als Zahnsegmente ausgebildeten Verlängerungen 16 gewährleisten eine immer gleichmässige Winkelbewegung der Stützen 11.

Der Antrieb 20 des Drehkranzes 10 erfolgt zweckmässig mit einer Schenkelfeder.

Das Führungselement 21 hat vorzugsweise die Form eines Rades, um die Reibungskräfte so gering wie möglich zu halten.

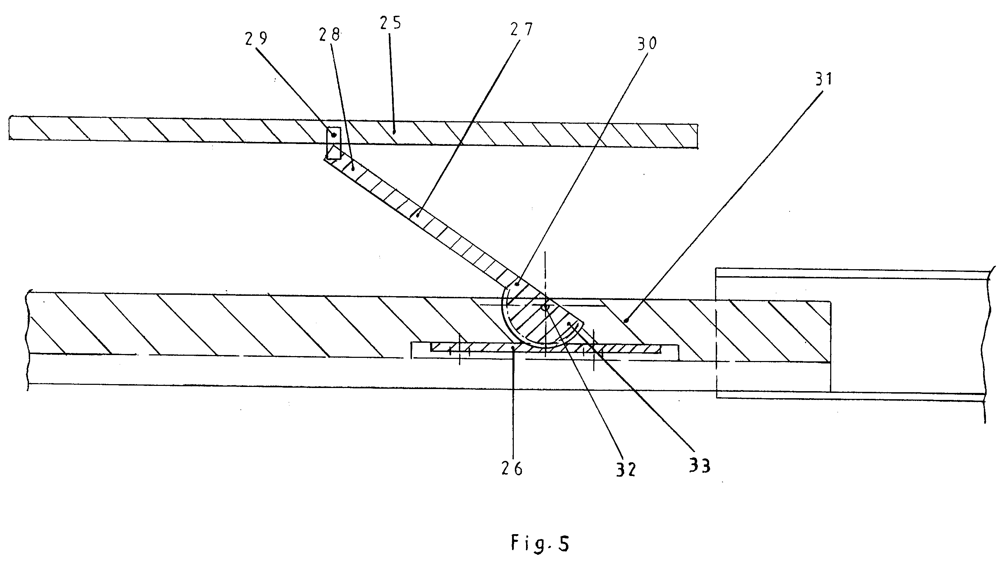

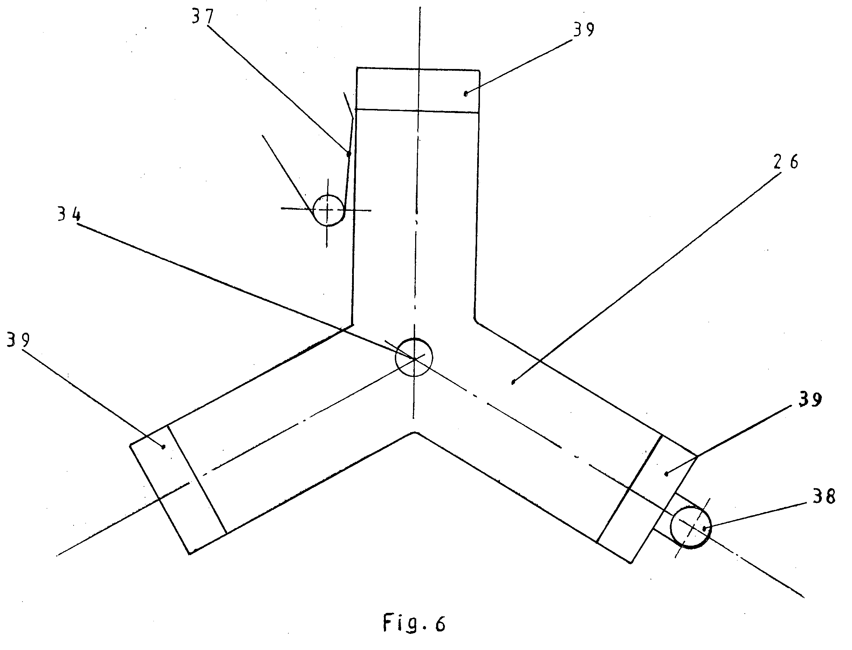

Im folgenden Teil werden unter Bezugnahme auf die Figuren 5 und 6 mögliche Ausführungsformen der zweiten erfindungsgemässen Vorrichtung beschrieben.

Dabei werden Ausführungsformen, wie sie in den abhängigen Ansprüchen definiert sind, normalerweise nicht wiederholt.

Die jeweils vorhandene Anzahl Stützen 27 richtet sich nach den Platzverhältnissen und der Hubhöhe im Verhältnis zum Drehkranz 26.

Die Trägerplatte 31 kann aus geeigneten thermoplastischen Kunststoffen hergestellt sein.

Die Form des Körpers 25 richtet sich nach dem jeweiligen Verwendungszweck.

Die Form des Drehkranzes 26 ist je nach Funktion variabel gestaltet.

Das Material, aus welchem der Krehkranz 26 hergestellt ist, richtet sich nach der jeweiligen Belastung.

Die Stützen 27 können in eingeschwenkter Position je nach vorhandenen Platzverhältnissen in die Trägerplatte 31 eingelassen sein.

Der Antrieb 27 des Drehkranzes 26 erfolgt zweckmässig mit einer Schenkelfeder.

Ein in ein Fahrzeug oder ein in ein Möbelstück eingebauter erfindungsgemässer Cupholder wird wie folgt in Betrieb genommen:

Durch push-Betrieb, beziehungsweise Eindrücken der Frontblende in Richtung Kassette, wird der Sicherungsmechanismus entriegelt und das Träger-Grundplattenelement 3 schwenkt unter Einwirkung der ersten Federkraft 4 automatisch aus.

Beim entsprechenden Ausschwenkwinkel fährt die Trägerplatte 5 unter Einwirkung der zweiten Federkraft 7 automatisch bis zur ersten Arretierung aus, oder die Trägerplatte 5 wird manuell herausgezogen. Dabei hebt sich automatisch das erste Halterungselement 9.

Durch weiteren manuellen Auszug der Trägerplatte 5 unter Ueberwindung der genannten Arretierung kann bei Bedarf das zweite Halterungselement 9 automatisch in Betrieb genommen werden.

Der erfindungsgemässe Cupholder ist nun voll funktionsfähig zur Aufnahme von zwei Behältnissen.

Der Cupholder wird wie folgt bei Nichtbedarf in die Ausgangsposition zurückgeführt:

Die Behältnisse werden entfernt. Dann wird manuell die Trägerplatte 5 über die erste Arretierung zurück in die Ausgangsposition geschoben. Dabei werden die beiden Halterungselemente 9 automatisch eingeklappt.

Durch gleichzeitiges Drücken der Frontblende in Richtung Kassette wird der Sicherungsmechanismus wieder aktiviert und dadurch wird das Träger-Grundplattenelement 3 verriegelt.

In der vorliegenden Erfindung werden die folgenden Bezugszeichen verwendet:
- 1: Kassettenboden
- 2: erster Lagerpunkt
- 3: Träger-Grundplattenelement
- 4: erste Federkraft
- 5: Trägerplatte
- 6: Grundplatte
- 7: zweite Federkraft
- 8: Führungsleisten
- 9: Halterungselement
- 10: Krehkranz
- 11: Stützen
- 12: erstes Ende der Stützen 11
- 13: Gelenk
- 14: zweites Ende der Stützen 11
- 15: Lagerpunkt
- 16: Verlängerung
- 17: Achse
- 18: Sicherungsscheibe
- 19: Brücken
- 20: Antrieb
- 21: Führungselement
- 22: Steuerungskurve
- 23: Umlenkhebel
- 24: Antriebssegment
- 25: Körper, entspricht Bezugszeichen 9
- 26: Drehkranz, entspricht Bezugszeichen 10
- 27: Stützen, entspricht Bezugszeichen 11
- 28: erstes Ende der Stützen 27, entspricht Bezugszeichen 12
- 29: Gelenk, entspricht Bezugszeichen 13
- 30: zweites Ende der Stützen 27, entspricht Bezugszeichen 14
- 31: Trägerplatte, entspricht Bezugszeichen 5
- 32: Lagerpunkt, entspricht Bezugszeichen 15
- 33: Verlängerung, entspricht Bezugszeichen 16
- 34: Achse, entspricht Bezugszeichen 17
- 35: Sicherungsscheibe, entspricht Bezugszeichen 18
- 36: Brücken, entspricht Bezugszeichen 19
- 37: Antrieb, entspricht Bezugszeichen 20
- 38: Führungselement, entspricht Bezugszeichen 21
- 39: Kraftübertragungsteilelement, entspricht Bezugszeichen 24.

## Patentansprüche

1. Vorrichtung in der Form einer Kassette zur Aufnahme/Halterung von Behältnissen, insbesondere Flaschen, Dosen, Becher, Gläser, dadurch gekennzeichnet, dass
- sich im Kassettenboden (1) ein erster Lagerpunkt (2) befindet, um welchen ein Träger-Grundplattenelement (3) schwenkbar gelagert und befestigt ist,
- dieses Träger-Grundplattenelement (3) mittels einem entriegelbaren Sicherungsmechanismus in der Kassette gehalten wird,
- dieses Träger-Grundplattenelement (3) mittels einer ersten Federkraft (4) bei entsprechender Entriegelung ausschwenkbar angeordnet ist,
- die Trägerplatte (5) auf der Grundplatte (6) bei entsprechendem Ausschwenkwinkel des Träger-Grundplattenelementes (3) entweder manuell oder mittels einer zweiten Federkraft (7) kontrolliert bis zu einer ersten Arretierung ausfahrbar und rückführbar mittels Führungsleisten (8) angeordnet ist,
- sich auf der Trägerplatte (5) ein erstes von insgesamt zwei Halterungselementen (9) befindet, welches axial bewegbar zu einem Drehkranz (10) in Form eines Drehhubes angeordnet ist,
- das genannte Halterungselement (9) von wenigstens drei ein- und ausschwenkbaren Stützen (11) gehalten und getragen wird,
- das erste Ende (12) jeder dieser Stützen (11) mit dem genannten Halterungselement (9) mittels einem Gelenk (13), welches wenigstens zwei voneinander unabhängige Bewegungen zulässt, verbunden ist,
- das zweite Ende (14) jeder dieser Stützen (11) in der genannten Trägerplatte (5) gelagert ist,
- sich im Bereich des genannten zweiten Endes (14) jeder dieser Stützen (11) eine über ihre Lagerpunkte (15) hinausgehende Verlängerung (16) befindet,
- diese Verlängerungen (16) mit dem Drehkranz (10) derart in Verbindung stehen, dass sie eine radiale Bewegung des genannten Drehkranzes (10) aufnehmen und umsetzen können,
- der genannte Drehkranz (10) mit der genannten Trägerplatte (5) über eine Achse (17) verbunden ist,
- der Drehkranz (10) mittels einer zentralen Sicherungsscheibe (18) und/oder mittels Brücken (19) auf der Unterseite der genannten Trägerplatte (5) gehalten wird,
- der Drehhub mittels eines integrierten Anschlages derart begrenzt ist, dass in ausgefahrener Endstellung eine Standfestigkeit gewährleistet ist,
- der Antrieb (20) des genannten Drehkranzes (10) exzentrisch erfolgt,
- dieser Antrieb (20) durch ein Führungselement (21) gesteuert wird,
- dieses Führungselement (21) mit dem genannten Drehkranz (10) mechanisch beweglich verbunden ist,
- die genannten Führungsleisten (8) derart geformt sind, dass einerseits die Trägerplatte (5) in diesen Führungsleisten (8) sicher geführt und gehalten wird und andererseits das genannte Führungselement (21) in diesen Führungsleisten (8) seine Funktion als Steuerungselement übernehmen kann,
- der Drehhubmechanismus ausgelöst wird, sobald das genannte Führungselement (21) die entsprechende Führungsleiste (8) der Grundplatte (6) verlässt, respektive
- der Drehhubmechanismus rückgängig gemacht wird, sobald das genannte Führungselement (21) die entsprechende Führungsleiste (8) der Grundplatte (6) wieder erreicht, und
- die Trägerplatte (5) durch manuelle Ueberwindung der genannten ersten Arretierung entweder eine Rückführung in die Ausgangsposition unter automatischer Rückführung des Drehhubmechanismuses des ersten Halterungselementes (9) zulässt oder einen weiteren Ausfahrweg in die Endposition ermöglicht, wobei sich in letzterem Falle das auf der Trägerplatte (5) angeordnete zweite Halterungselement (9) entfaltet, welches analog dem genannten ersten Halterungselement (9) aufgebaut ist und die gleiche Funktion erfüllt, wobei auch in diesem Falle die Rückführung in die Ausgangsposition unter automatischer Rückführung der Drehhubmechanismen beider Halterungselemente (9) manuell erfolgt.

2. Vorrichtung nach Anspruch 1, dadurch gekennzeichnet, dass der Sicherungsmechanismus eine an der Grundplatte (6) starr angebrachte offene Steuerungskurve (22) und einen am Kassettenboden (1) beweglich angeordneten Umlenkhebel (23) umfasst, wobei dieser Umlenkhebel (23) von der Steuerungskurve (22) im entsprechenden Moment geführt wird und an entsprechender Position rastet.

3. Vorrichtung nach einem der Ansprüche 1 bis 2, dadurch gekennzeichnet, dass das Halterungselement (9) von drei oder vier, vorzugsweise drei, Stützen (11) gehalten und getragen wird.

4. Vorrichtung nach einem der Ansprüche 1 bis 3, dadurch gekennzeichnet, dass die Verbindung zwischen den Stützen (11) und dem Halterungselement (9) mittels einem Kreuzgelenk, Filmscharnier oder Kugelgelenk erfolgt.

5. Vorrichtung nach einem der Ansprüche 1 bis 4, dadurch gekennzeichnet, dass die Verlängerungen (16) in den Stützen (11) als Zahnsegmente ausgebildet sind.

6. Vorrichtung nach einem der Ansprüche 1 bis 5, dadurch gekennzeichnet, dass der Drehkranz (10) pro Stütze (11) je ein Antriebssegment (24) aufweist, insbesondere solche Antriebssegmente (24), welche in die als Zahnsegmente ausgebildeten Verlängerungen (16) eingreifen.

7. Vorrichtung nach einem der Ansprüche 1 bis 6, dadurch gekennzeichnet, dass das Führungselement (21) die Form eines Rades hat.

8. Vorrichtung nach einem der Ansprüche 1 bis 7, dadurch gekennzeichnet, dass das Halterungselement (9) die Form eines Ringes hat, vorzugsweise ausgerüstet mit elastischen Lippen.

9. Vorrichtung, mit welcher ein Körper (25) axial bewegbar zu einem Drehkranz (26) in Form eines Drehhubes angeordnet ist, dadurch gekennzeichnet, dass
- der genannte Körper (25) von wenigstens drei ein- und ausschwenkbaren Stützen (27) gehalten und getragen wird,
- das erste Ende (28) jeder dieser Stützen (27) mit dem genannten Körper (25) mittels einem Gelenk (29), welches wenigstens zwei voneinander unabhängige Bewegungen zulässt, verbunden ist,
- das zweite Ende (30) jeder dieser Stützen (27) in einer Trägerplatte (31) gelagert ist,
- sich im Bereich des genannten zweiten Endes (30) jeder dieser Stützen (27) eine über ihre Lagerpunkte (32) hinausgehende Verlängerung (33) befindet,
- diese Verlängerungen (33) mit dem Drehkranz (26) derart in Verbindung stehen, dass sie eine radiale Bewegung des genannten Drehkranzes (26) aufnehmen und umsetzen können,
- der genannte Drehkranz (26) mit der genannten Trägerplatte (31) über eine Achse (34) verbunden ist,
- der genannte Drehkranz (26) mittels einer zentralen Sicherungsscheibe (35) und/oder mittels Brücken (36) auf einer Seite der genannten Trägerplatte (31) gehalten wird,
- der Drehhub mittels eines integrierten Anschlages derart begrenzt ist, dass in ausgefahrener Endstellung eine Standfestigkeit gewährleiset ist,
- der Antrieb (37) des genannten Drehkranzes (26) zentrisch oder exzentrisch erfolgt,
- der Antrieb (37) durch ein Führungselement (38) gesteuert wird, und
- dieses Führungselement (38) mit dem genannten Drehkranz (26) verbunden ist.

10. Vorrichtung nach Anspruch 9, dadurch gekennzeichnet, dass die Verbindung zwischen den Stützen (27) und dem Körper (25) mittels einem Kreuzgelenk, Filmscharnier oder Kugelgelenk erfolgt.

11. Vorrichtung nach einem der Ansprüche 9 bis 10, dadurch gekennzeichnet, dass die Verlängerungen (33) in den Stützen (27) als Zahnsegmente oder Reibräder ausgebildet sind.

12. Vorrichtung nach einem der Ansprüche 9 bis 11, dadurch gekennzeichnet, dass der Drehkranz (26) pro Stütze (27) je ein Kraftübertragungsteilelement (39) aufweist, insbesondere solche Elemente, welche die Kraft formschlüssig übertragen.
